# EUROPEAN PATENT APPLICATION

(11) **EP 1 612 451 A1**
(43) Date of publication of application: **04.01.2006**
(21) Application number: 03712803.0
(22) Date of filing: 20.03.2003
(51) Int. Cl.: F16H 1/46, F16H 1/28, B25J 17/00

(54) **ROTATION TRANSMISSION DEVICE**

(71) Applicant: Nihon Robotics Kabushiki Kaisha, Tokyo 121-0836 (JP)
(72) Inventor: KOSEKI, Mitsuhiro, Adachi-ku, Tokyo 121-0836 (JP)
(74) Representative: Sajda, Wolf E.
(86) International application number: PCT/JP2003/003449
(87) International publication number: WO 2004/083680

(57) **Abstract**

In a rotation transmission device, a first planetary gear mechanism has a first gear, a second gear, a first planetary gear body, and a first carrier body. A second planetary gear mechanism has a third gear, a fourth gear, a second planetary gear body, and a second carrier body. The ratio of the pitch circle diameters of the third gear, fourth gear and second planetary gear body is the same as the ratio of the pitch circle diameters of the first gear, second gear, and first planetary gear body. The connecting element that is the first gear, second gear or first carrier body is adapted to be rotated integrally with an element corresponding to the connecting element. A first base body side element is connected to-the first base body, and a second base body side element is connected to the second base body. Rotation is transmitted between an element corresponding to the first base body side element and a first rotary body, and rotation is transmitted between an element corresponding to the second base body side element and a second rotary body.

## Description

### Technical Field

The present invention relates to a rotation transmission device that transmits rotation while eliminating interference due to a joint portion.

### Background Art

For example, in a conventional multi-joint robot apparatus having a link mechanism in which connection is effected through a plurality of joint portions, a motor for driving each joint portion is directly mounted to each joint portion. -Thus, to support the weight of the motors, it is necessary to enhance the strength of the link mechanism, resulting in an increase in the weight of the link mechanism and the robot apparatus as a whole.

In this regard, it might be possible to adopt a system in which the motors are arranged on a base supporting the link mechanism, with driving force being transmitted to the corresponding joint portion; such a system, however, is subject to interference due to rotation of joint portions situated between the corresponding joint portion and the base, and it is rather difficult to prepare a control program in which such interference is taken into consideration. Further, a mechanism for mechanically eliminating such interference as mentioned above becomes more complicated and larger as the number of joints increases.

### DISCLOSURE OF THE INVENTION

The present invention has been made with a view toward solving the above problems in the prior art. It is an object of the present invention to provide a rotation transmission device capable of transmitting rotation while eliminating interference due to a joint portion with a simple construction.

A rotation transmission device according to the present invention is provided in a base body assembly having first and second base bodies connected together so as to be rotatable relative to each other, the rotation being transmitted between a first rotary body provided on the first base body and a second rotary body provided on the second base body, including: a first planetary gear mechanism having a first gear rotatable around a rotation center, a second gear arranged coaxially with the first gear, a first planetary gear body meshed with the first and second gears to make a planetary movement relative to the first and second gears, and a first carrier body rotated around the rotation center relative to the first and second gears with a revolution of the first planetary gear body with respect to the first and second gears; and a second planetary gear mechanism having a third gear rotatable around the rotation center, a fourth gear arranged coaxially with the third gear, a second planetary gear body meshed with the third and fourth gears to make a planetary movement relative to the third and fourth gears, and a second carrier body rotated around the rotation center relative to the third and fourth gears with a revolution of the second planetary gear body with respect to the third and fourth gears, in which the ratio of the pitch circle diameters of the third gear, the fourth gear, and the second planetary gear body is the same as the ratio of the pitch circle diameters of the first gear, the second gear, and the first planetary gear body, in which, assuming that the third gear is an element corresponding to the first gear, that the fourth gear is an element corresponding to the second gear, and that the second carrier body is an element corresponding to the first carrier body, a connecting element, which is one of the first gear, the second gear, and the first carrier body, rotates integrally with an element corresponding to the connecting element, in which a first base body side element, which is one of the two elements obtained by excluding the connecting element from the first gear, the second gear, and the first carrier body, is connected to the first base body so as to be rotatable with respect to the second base body through relative rotation of.the first base body with respect to the second base body, in which a second base body side element, which is obtained by excluding the connecting element and the first base body side element from the first gear, the second gear, and the first carrier body, is connected to the second base body so as to be rotatable with respect to the first base body through relative rotation of the second base body with respect to the first base body, and in which rotation is transmitted between an element corresponding to the first base body side element and the first rotary body, and rotation is transmitted between an element corresponding to the second base body side element and the second rotary body.

### Brief Description of the Drawings

Fig. 1 is a side view of a rotation transmission device according to Embodiment 1 of the present invention;
Fig. 2 is a sectional view taken along the line II-II of Fig. 1;
Fig. 3 is a sectional view taken along the line III-III of Fig. 2;
Fig. 4 is a sectional view taken along the line IV-IV of Fig. 2;
Fig. 5 is an explanatory view schematically showing the construction of a rotation transmission device according to Embodiment 1;
Fig. 6 is an explanatory view schematically showing the construction of a rotation transmission device according to Embodiment 2;
Fig. 7 is an explanatory view schematically showing the construction of a rotation transmission device according to Embodiment 3;
Fig. 8 is an explanatory view schematically showing the construction of a rotation transmission device according to Embodiment 4 of the present invention;
Fig. 9 is an explanatory view schematically showing the construction of a rotation transmission device according to Embodiment 5 of the present invention;
Fig. 10 is a sectional view of a rotation transmission device according to Embodiment 6 of the present invention; and
Fig. 11 is a sectional view of a rotation transmission device according to Embodiment 7 of the present invention.

### Best Mode for carrying out the Invention

In the following, preferred embodiments of the present invention will be described with reference to the drawings.

### Embodiment 1

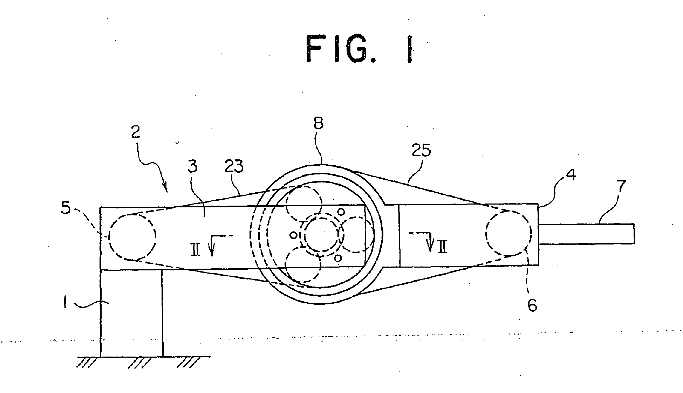

Fig. 1 is a side view of a rotation transmission device according to Embodiment 1 of the present invention. In the drawing, a link mechanism 2, which is a base body assembly, is supported by the base 1. The link mechanism 2 has a first arm 3 as a first base body fixed to the base 1, and a second arm 4 as a second base body rotatably connected to the first arm 3.

A first pulley 5 as a first rotary body is rotatably provided on the first arm 3. A second pulley 6 as a second rotary body is rotatably provided on the second arm 4. Fixed to the second pulley 6 is a third arm 7 integrally rotated with the second pulley 6.

Mounted on the base 1 are a first motor (not shown) for rotating the second arm 4 with respect to the first arm 3, and a second motor (not shown) for rotating the third arm 7 with respect to the second arm 4. Mounted on the joint portion of the link mechanism 2 is a rotation transmission device 8 that transmits the rotation of the first pulley 5 to the second pulley 6 while eliminating interference due to rotation of the second arm 4 with respect to the first arm 3. The driving force of the second motor is transmitted to the third arm 7 through the first pulley 5, the rotation transmission device 8, and the second pulley 6.

While in Fig. 1 the rotation transmission device 8 is depicted as larger than the link mechanism 2 for the sake of simplicity, it is in reality also possible to make it sufficiently smaller than the link mechanism 2, and it does not hinder a reduction in the size of the link mechanism 2.

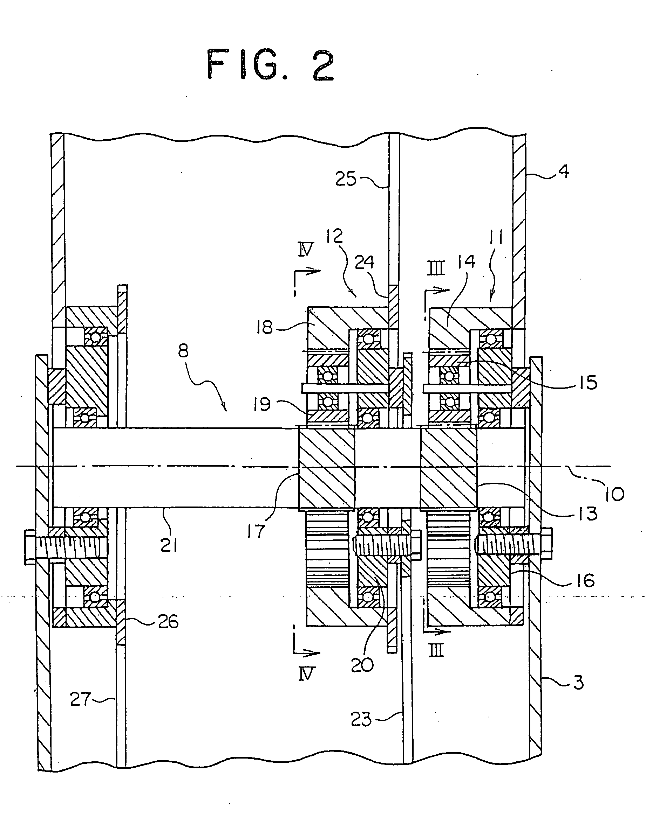

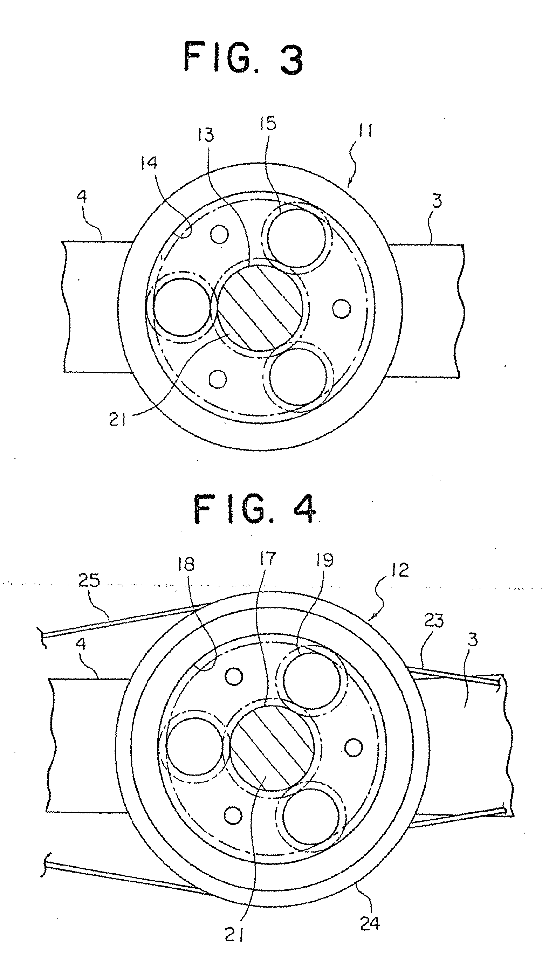

Fig. 2 is a sectional view taken along the line II-II of Fig. 1, Fig. 3 is a sectional view taken along the line III-III of Fig. 2, and Fig. 4 is a sectional view taken along the line IV-IV of Fig. 2.

In the drawings, the rotation transmission device 8 has first and second planetary gear mechanisms 11, 12 arranged so as to be coaxial with respect to each other.

The first planetary gear mechanism 11 has a first sun gear 13 as a first gear rotatable around a rotation center 10, a ring-like first internal gear 14 as a second gear arranged coaxially with the first sun gear 13, a plurality of (three, in this case) first planetary gears 15 as first planetary gear bodies in mesh with the first sun gear 13 and the first internal gear 14, and a first carrier body 16 rotatably retaining the first planetary gears 15.

The first planetary gears 15 make relative movements with respect to the first sun gear 13 and the first internal gear 14. The first carrier body 16 is made to rotate relatively around the rotation center 10 with respect to the first sun gear 13 and the first internal gear 14 with the revolution of the first planetary gears 15 with respect to the first sun gear 13 and the first internal gear 14.

The second planetary gear mechanism 12 has a second sun gear 17 as a third gear rotatable around the rotation center 10, a ring-like second internal gear 18 as a fourth gear arranged coaxially with the second sun gear 17, a plurality of (three, in this case) second planetary gears 19 as second planetary gear bodies in mesh with the second sun gear 17 and the second internal gear 18, and a second carrier body 20 rotatably retaining the second planetary gears 19.

The second planetary gears 19 make relative movements with respect to the second sun gear 17 and the second internal gear 18. The second carrier body 20 is made to rotate relatively around the rotation center 10 with respect to the second sun gear 17 and the second internal gear 18 with the revolution of the second planetary gears 19 with respect to the second sun gear 17 and the second internal gear 18.

The ratio of the pitch circle diameters of the second sun gear 17, the second internal gear 18, and the second planetary gears 19 is the same as the ratio of the pitch circle diameters of the first sun gear 13, the first internal gear 14, and the first planetary gears 15. In this example, the sizes and numbers of teeth of the second sun gear 17, the second internal gear 18, and the second planetary gears 19 are the same as those of the first sun gear 13, the first internal- gear 14, and the first planetary gears 15.

Here, the second sun gear 17 is an element corresponding to the first sun gear 13, the second internal gear 18 is an element corresponding to the first internal gear 14, and the second carrier body 20 is an element corresponding to the first carrier body 16.

Further, in this example, the first sun gear 13 is a connecting element, the first carrier body 16 is a first base body side element, and the first internal gear 14 is a second base body side element.

The first sun gear 13, which is a connecting element, is adapted to rotate integrally with the second sun gear 17, which is an element corresponding thereto. That is, the first and second sun gears 13, 17 are formed on a common shaft 21 so as to be axially spaced apart from each other.

The first carrier body 16, which is the first base body side element, is fixed to the first arm 3. That is, the first carrier body 16 is connected to the first arm 3 so as to be made to rotate relative to the second arm 4 by the relative rotation of the first arm 3 with respect to the second arm 4.

The first internal gear 14, which is the second base body side element, is fixed to the second arm 4. That is, the first internal gear 14 is connected to the second arm 4 so as to be made to rotate relative to the first arm 3 by the relative rotation of the second arm 4 with respect to the first arm 3.

A third pulley 22 is fixed to the second carrier body 20. A first belt 23 is stretched between the first pulley 5 and the third pulley 22. The rotation of the first pulley 5 is transmitted to the second carrier body 20, which is an element corresponding to the first base body side element, through the first belt 23 and the third pulley 22.

A fourth pulley 24 is fixed to the second internal gear 18. A second belt 25 is stretched between the fourth pulley 24 and the second pulley 6. The rotation of the second internal gear 18, which is an element corresponding to the second base body side element, is transmitted to the second pulley 6 through the fourth pulley 24 and the second belt 25.

Fixed to the second arm 4 is a fifth pulley 26 that is rotated integrally with the second arm 4 with respect to the first arm 3. The driving force of the first motor is transmitted to the second arm 4 through a third belt 27 and the fifth pulley 26.

Next, the operation of this embodiment will be described. For example, when the second motor is not driven, and only the first motor is driven, and the second arm 4 is rotated with respect to the first arm 3, the first internal gear 14 is rotated around the rotation center 10, and the planetary gears 15 are rotated, and the first sun gear 13 is rotated. At this time, the first carrier body 16 retaining the planetary gears 15 is fixed to the first arm 3, so that the planetary gears 15 only rotate at the same position, while they are made to revolve relative to the first sun gear 13 and the first internal gear 14 to make a planetary movement.

The first and second sun gears 13, 17 are formed on the common shaft 21, so that when the first sun gear 13 is rotated, the second sun gear 17 is also rotated integrally in the same direction. When the second sun gear 17 is rotated, the second planetary gears 19 are rotated, and the second internal gear 18 is rotated. At this time, when no rotation is transmitted to the second carrier body 22, the second planetary gears 19 only perform rotation.

Thus, rotation of the second internal gear 18 with respect to the second arm 4 is not caused only through the rotation of the second arm 4 with respect to the first arm 3. Thus, if the second arm 4 is rotated with respect to the first arm 3, the angle of the third arm 7 with respect to the second arm 4 does not change.

On the other hand, when the first motor is not driven, and only the second motor is driven to rotate the first pulley 5, the rotation of the first pulley 5 is transmitted to the second carrier body 20 through the first belt 23 and the third pulley 22. When the second carrier body 20 is rotated, the second planetary gears 19 perform a planetary movement around the rotation center 10. As a result, the second internal gear 18 is rotated. At this time, the second arm 4 is at rest with respect to the first arm 3, so that the second internal gear 18 is rotated with respect to the second arm 4. The second sun gear 17 remains at rest.

The rotation of the second internal gear 18 with respect to the second arm 4 is transmitted to the second pulley 6 through the fourth pulley 24 and the second belt 25, and is further transmitted to the third arm 7.

In this way, the transmission of rotation between the first pulley 5 and the second pulley 6 is free from interference due to an angular change of the joint portion between the first arm 3 and the second arm 4. This also applies to the case in which the first and second motors are driven simultaneously and in which the second arm 4 and the third arm 7 are rotated simultaneously. That is, in the rotation transmission device 8 of Embodiment 1, it is possible to transmit rotation while eliminating interference due to the joint portion with a simple construction.

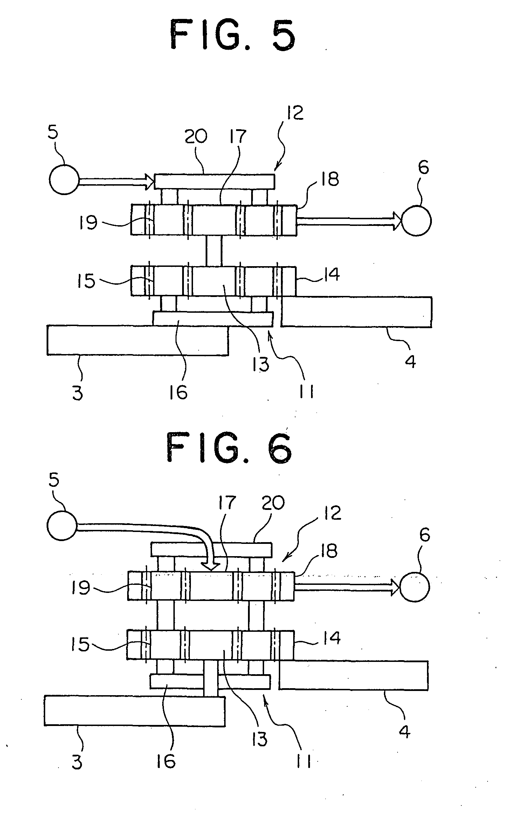

Here, Fig. 5 is an explanatory view schematically showing the construction of the rotation transmission device 8 of Embodiment 1. As shown in Fig. 5, the first sun gear 13, which is a connecting element, is connected to the second sun gear 17, which is a corresponding element. The first carrier body 16, which is a first base body side element, is fixed to the first arm 3 . The first internal gear 14, which is a second base body side element, is fixed to the second arm 4.

The rotation of the first pulley 5 is transmitted to the second carrier body 20, which is an element corresponding to the first base body side element. The rotation of the second internal gear 18, which is an element corresponding to the second base body side element, is transmitted to the second pulley 6.

In this way, by using the rotation transmission device 8, the transmission route for the rotation of the second arm 4 and the transmission route for the rotation of the first pulley 5 differ from each other, so that their respective rotating operations are free from interference.

### Embodiment 2

Fig. 6 is an explanatory view schematically showing the construction of a rotation transmission device according to Embodiment 2. In Embodiment 2, the first carrier body 16 is a connecting element, the first sun gear 13 is a first base body side element, and the first internal gear 14 is a second base body side element.

That is, the first carrier body 16, which is a connecting element, is connected to the second carrier body 20, which is a corresponding element. The first sun gear 13, which is a first base body side element, is fixed to the first arm 3. The first internal gear 14, which is a second base body side element, is fixed to the second arm 4.

The rotation of the first pulley 5 is transmitted to the second sun gear 17, which is an element corresponding to the first base body side element. The rotation of the second internal gear 18, which is an element corresponding to the second base body side element, is transmitted to the second pulley 6.

In this construction also, the transmission of rotationbetween the first pulley 5 and the second pulley 6 are free from interference due to an angular change of the joint portion between the first arm 3 and the second arm 4. Thus, also in the rotation transmission device of Embodiment 2, it is possible to transmit rotation while eliminating interference due to a joint portion with a simple construction.

### Embodiment 3

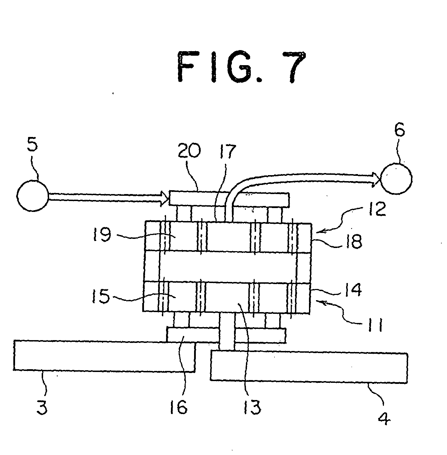

Fig. 7 is an explanatory view schematically showing the construction of a rotation transmission device according to Embodiment 3. In Embodiment 3, the first internal gear 14 is a connecting element, the first carrier body 16 is a first base body side element, and the first sun gear 13 is a second base body side element.

That is, the first internal gear 14, which is a connecting element, is connected to the second internal gear 18, which is a corresponding element. The first carrier body 16, which is a first base body side element, is fixed to the first arm 3. The first sun gear 13, which is a second base body side element, is fixed to the second arm 4.

The rotation of the first pulley 5 is transmitted to the second carrier body 20, which is an element corresponding to the first base body side element. The rotation of the second sun gear 17, which is an element corresponding to the second base body side element, is transmitted to the second pulley 6.

In this construction also, the transmission of rotation between the first pulley 5 and the second pulley 6 are free from interference due to an angular change of the joint portion between the first arm 3 and the second arm 4. Thus, also in the rotation transmission device of Embodiment 3, it is possible to transmit rotation while eliminating interference due to a joint portion with a simple construction.

While in Embodiments 1 through 3 described above rotation is transmitted from the first pulley 5 to the second pulley 6, it is also possible to transmit rotation in an opposite direction, that is, from the second pulley 6 to the first pulley 5 while eliminating interference due to a joint portion.

Further, while in Embodiments 1 through 3 the driving force of a motor is transmitted, the present invention is also applicable to the transmission of a manual operating force. For example, in a master-slave type multi-joint operating lever, it is possible to transmit rotation of each joint portion generated through operation of the operating lever to the proximal end portion of the operating lever. This makes it possible to eliminate interference due to a joint portion situated at some midpoint in the transmission route, so that it is possible to simplify the control program of a master-slave type control device. Further, it is possible to transmit the rotation of a joint portion mechanically to the base side.

### Embodiment 4

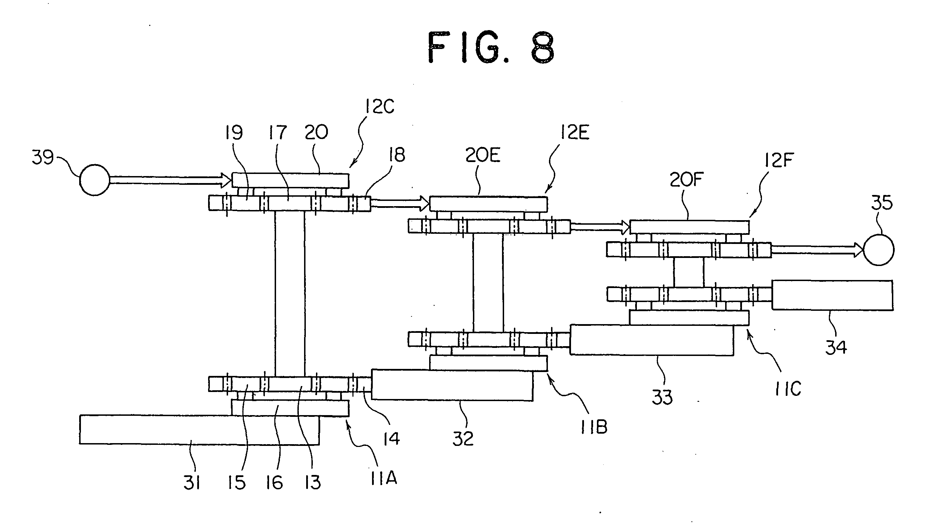

Fig. 8 is an explanatory view schematically showing the construction of a rotation transmission device according to Embodiment 4 of the present invention. While in Embodiment 1 interference due to a single joint portion is eliminated to transmit rotation, in Embodiment 4, interference due to a plurality of joint portions is entirely eliminated to transmit rotation. That is, by arranging a mechanism similar to that of Embodiment 1 for each joint portion, it is possible to eliminate interference due to a plurality of joint portions.

In. Fig. 8, a base body assembly has first through fourth arms 31 through 34 as base bodies connected in series so as to be capable of relative rotation with respect to each other. A rotatable rotary body 35 is mounted on the fourth arm 34. The rotary body 35 is rotated with respect to the fourth arm 34 by the driving force of a fourth motor 39.

Respectively mounted on the first through third arms 31 to 33 are first planetary gear mechanisms 11A through 11C similar to the first planetary gear mechanism 11 of Embodiment 1. The second arm 32 is rotated integrally with the first internal gear 14 of the first planetary gear mechanism 11A. The third arm 33 is rotated integrally with the first internal gear 14 of the first planetary gear mechanism 11B. The fourth arm 34 is rotated integrally with the first internal gear 14 of the first planetary gear mechanism 11C.

Between the first arm 31 and the second arm 32, there is provided second planetary gear mechanism 12C similar to the second planetary gear mechanism 12 of Embodiment 1. The second planetary gear mechanism 12C is arranged coaxially with the first planetary gear mechanism 11A.

Between the second arm 32 and the third arm 33, there is provided a second planetary gear mechanism 12E similar to the second planetary gear mechanism 12 of Embodiment 1. The second planetary gear mechanism 12E is arranged coaxially with the first planetary gear mechanism 11B.

Between the third arm 33 and the fourth arm 34, there is provided a second planetary gear mechanism 12F similar to the second planetary gear mechanism 12 of Embodiment 1. The second planetary gear mechanism 12F is arranged coaxially with the first planetary gear mechanism 11C.

In this device, the driving force of the motor 39 is transmitted to the rotary body 35 through the second planetary gear mechanisms 12C, 12E, 12F.

At this time, through a combination of the first planetary gear mechanism 11A and the second planetary gear mechanism 12C, the interference due to the movement of the joint portion between the first arm 31 and the second arm 32 is eliminated. Further, through a combination of the first planetary gear mechanism 11B and the second planetary gear mechanism 12E, the interference due to the movement of the joint portion between the second arm 32 and the third arm 33 is eliminated. Further, through a combination of the first planetary gear mechanism 11C and the second planetary gear mechanism 12F, the interference due to the movement of the joint portion between the third arm 33 and the fourth arm 34 is eliminated.

In this way, also in the case of the transmission of rotation through a plurality of joint portions, it is possible to eliminate the interference due to the joint portions with a simple construction. That is, regarding the arms situated on both sides of each joint portion as the first and second base bodies, it is possible to eliminate the interference due to joint portions by a similar construction if the number of joint portions increases.

For example, assuming that the first arm 31 is the first base body and that the second arm 32 adjacent thereto is the second base body, the rotating portion of the motor 39 constitutes the first rotary body, and the second carrier body 20E of the second planetary gear mechanism 12E constitutes the second rotary body, and the rotation of the motor 39 is transmitted to the second carrier body 20E without suffering interference due to the joint portion between the first and second arms 31, 32.

Further, assuming that the second arm 32 is the first base body and that the third arm 32 adjacent thereto is the second base body, the second carrier body 20E constitutes the first rotary body, and the second carrier body 20F of the second planetary gear mechanism 12F constitutes the second rotary body, and the rotation of the second carrier body 20E is transmitted to the second carrier body 20F without suffering interference due to the joint portion between the second and third arms 32, 33.

Similarly, the rotation of the second carrier body 20F is transmitted to the rotary body 35 without suffering interference due to the joint portion between the third and fourth arms 33, 34. Thus, the rotation of the motor 39 is transmitted to the rotary body 35 without suffering interference due to the joint portion in between.

While in Embodiment 4 the first sun gear 13 is a connecting element, the first carrier body 16 is a first base body side element, and the first internal gear 14 is a second base body side element, it is also possible, as in, for example, Embodiment 2, for the first carrier body 16 to be the connecting element, the first sun gear 13 to be the first base body side element, and the first internal gear 14 to be the second base body side element. Further, as in, for example, Embodiment 3, it is also possible for the first internal gear 14 to be the connecting element, the first carrier body 16 to be the first base body side element, and the first sun gear 13 to be the second base body side element.

### Embodiment 5

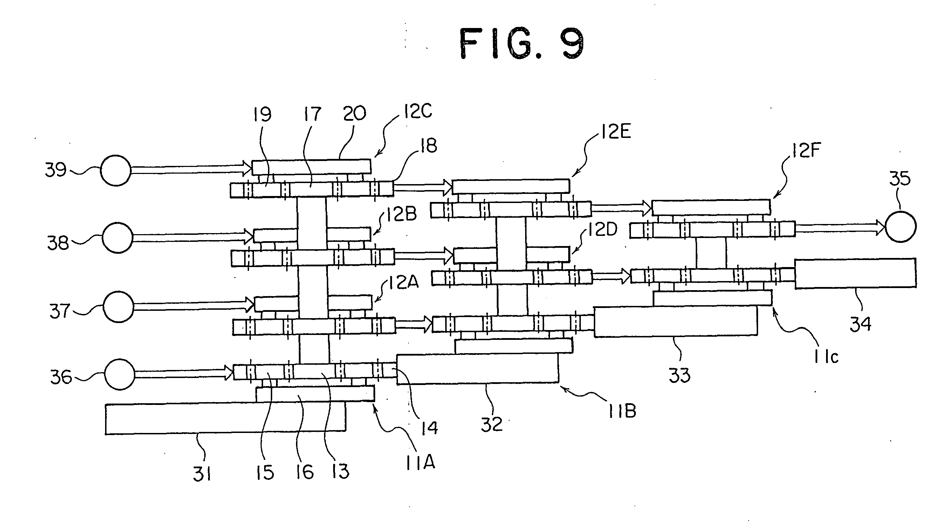

Fig. 9 is an explanatory view schematically showing the construction of a rotation transmission device according to Embodiment 5 of the present invention. While in Embodiment 4 only the rotary body 35 is driven, in Embodiment 5, driving force is transmitted to all the joint portions.

In Fig. 9, a base body assembly has first through fourth arms 31 through 34 as base bodies connected in series so as to be capable of relative rotation with respect to each other. A rotatable rotary body 35 is mounted on the fourth arm 34. The second arm 32 is driven with respect to the first arm 31 by the driving force of a first motor 36. The third arm 33 is driven with respect to the second arm 32 by the driving force of a second motor 37. The fourth arm 34 is driven with respect to the third arm 33 by the driving force of a third motor 38. The rotary body 35 is rotated with respect to the fourth arm 34 by the driving force of a fourth motor 39.

Respectively mounted on the first through third arms 31 to 33 are first planetary gear mechanisms 11A through 11C similar to the first planetary gear mechanism 11 of Embodiment 1. The second arm 32 is rotated integrally with the first internal gear 14 of the first planetary gear mechanism 11A. The third arm 33 is rotated integrally with the first internal gear 14 of the first planetary gear mechanism 11B. The fourth arm 34 is rotated integrally with the first internal gear 14 of the first planetary gear mechanism 11C.

Between the first arm 31 and the second arm 32, there is provided second planetary gear mechanisms 12A to 12C similar to the second planetary gear mechanism 12 of Embodiment 1. The second planetary gear mechanisms 12A to 12C are arranged coaxially with the first planetary gear mechanism 11A.

Between the second arm 32 and the third arm 33, there is provided second planetary gear mechanisms 12D and 12E similar to the second planetary gear mechanism 12 of Embodiment 1. The second planetary gear mechanisms 12D and 12E are arranged coaxially with the first planetary gear mechanism 11B.

Between the third arm 33 and the fourth arm 34, there is provided a second planetary gear mechanism 12F similar to the second planetary gear mechanism 12 of Embodiment 1. The second planetary gear mechanism 12F is arranged coaxially with the first planetary gear mechanism 11C.

In this device, the driving force of the first motor 36 is transmitted to the second arm 32 through the first planetary gear mechanism 11A. Further, the driving force of the second motor 37 is transmitted to the third arm 33 through the second planetary gear mechanism 12A and the first planetary gear mechanism 11B. At this time, the interference due to the joint portion between the first arm 31 and the second arm 32 is eliminated through a combination of the first planetary gear mechanism 11A and the second planetary gear mechanism 12A.

Further, the driving force of the third motor 38 is transmitted to the fourth arm 34 through the second planetary gear mechanisms 12B, 12D and the first planetary gear mechanism 11C. At this time, the interference due to the movement of the joint portion between the first arm 31 and the second arm 32 is eliminated through a combination of the first planetary gear mechanism 11A and the second planetary gear mechanism 12B. Further, the interference due to the movement of the joint portion between the second arm 32 and the third arm 33 is eliminated through a combination of the first planetary gear mechanism 11B and the second planetary gear mechanism 12D.

Further, the driving force of the fourthmotor 39 is transmitted to the rotary body 35 through the second planetary gear mechanisms 12C, 12E, 12F. At this time, the interference due to the movement of the joint portion between the first arm 31 and the second arm 32 is eliminated through a combination of the first planetary gear mechanism 11A and the second planetary gear mechanism 12C. Further, the interference due to the movement of the joint portion between the second arm 32 and the third arm 33 is eliminated through a combination of the first planetary gear mechanism 11B and the second planetary gear mechanism 12E. Further, the interference due to the movement of the joint portion between the third arm 33 and the fourth arm 34 is eliminated through a combination of the first planetary gear mechanism 11C and the second planetary gear mechanism 12F.

Thus, it is possible to control a plurality of joint portions independently of each other. That is, with a simple construction, it is possible to transmit driving force from the first arm 31 side to control solely the desired joint portion to be moved without being influenced by the joint portions in the route.

Further, since it is possible to arrange a drive source for driving a plurality of joint portions on the base side, the weight of the base body assembly can be reduced, and the driving power can be reduced. For example, in a multi-joint robot, it is possible to reduce the weight and strength of the link mechanism, thereby achieving a reduction in the weight of and power used for the robot apparatus as a whole. This makes it possible to drive a robot apparatus for a long period of time, which has been rather difficult to perform.

Such a robot apparatus has a multi-joint arm portion as a base body assembly. The multi-joint arm portion has three or more base bodies connected in series so as to be rotatable with respect to each other. Further, using the adjacent base bodies as the first and second base bodies, first and second planetary gear mechanisms are arranged at each joint portion.

In Embodiments 4, 5, as the rotation transmission means indicated by arrows in Figs. 8 and 9, it is possible to use various means, such as belts as shown in Embodiment 1, chains, gears, a combination of a plurality of gears, or a parallel link mechanism.

### Embodiment 6

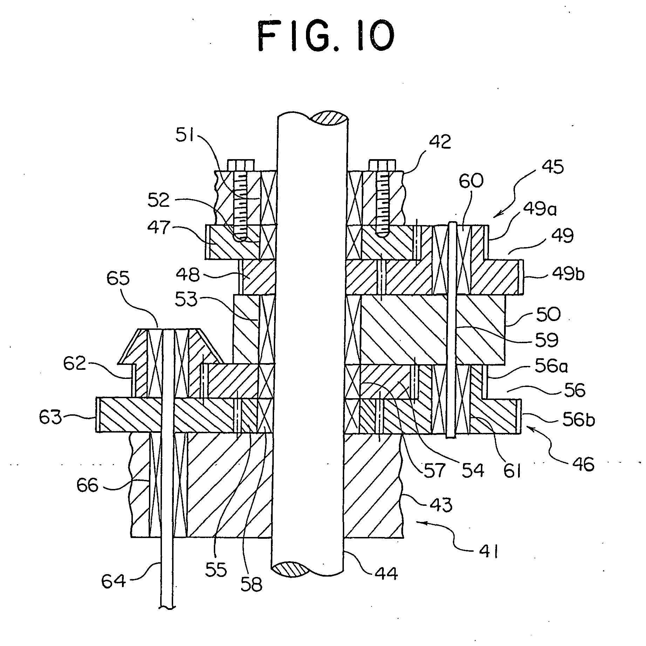

Next, Fig. 10 is a sectional view of a rotation transmission device according to Embodiment 6 of the present invention. In this example, the rotation transmission device is used for the purpose of driving the front wheel of a bicycle.

In the drawing, a bicycle main body 41, which is a base body assembly, has a main frame 42 as a first base body, and a front frame 43 as a second base body, which are connected so as to be rotatable relative to each other. A handle shaft 44 is fixed to the front frame 43.

The main frame 42 is provided with a pedal shaft (not shown) as a first rotary body. The front frame 43 is provided with the front wheel (not shown) as a second rotary body. That is, in Embodiment 6, the rotation of the pedal shaft is transmitted to the front wheel while eliminating the interference due to rotation at the handle shaft 44.

Further, the rotation transmission device of Embodiment 6 has first and second planetary gear mechanisms 45, 46 arranged coaxially to each other.

The first planetary gear mechanism 45 has a main side stationary gear 47 as a first gear capable of relative rotation around the handle shaft 44, which is the rotation center, a front side stationary gear 48 as a second gear arranged coaxially with the main side stationary gear 47, a first planetary gear body 49 in mesh with the main side stationary gear 47 and the front side stationary gear 48, and a carrier member 50 as a first carrier body rotatably retaining the first planetary gear body 49.

The main side stationary gear 47 is fixed to the main frame 42. The front side stationary gear 48 is fixed to the handle shaft 44. The main side stationary gear 47 and the front side stationary gear 48 are spur gears of different diameters. The first planetary gear body 49 has a first spur gear portion 49a which is in mesh with the front side stationary gear 48, and a second spur gear portion 49b which is fixed coaxially with the first spur gear portion 49a so as to rotate integrally with the first spur gear portion 49a and which is in mesh with the front side stationary gear 48.

Bearings 51, 52, 53 exist between the handle shaft 44 and the main frame 42, the main side stationary gear 47, and the carrier body 50, respectively. That is, the main frame 42, the main side stationary gear 47, and the carrier body 50 are capable of relative rotation with respect to the handle shaft 44.

The first planetary gear body 49 makes relative planetary movement with respect to the main side stationary gear 47 and the front side stationary gear 48. With the revolution of the first planetary gear 49, the carrier body 50 is rotated around the handle shaft 44 relative to the main side stationary gear 47 and the front side stationary gear 48.

The second planetary gear mechanism 46 has an input side gear 54 as a third gear rotatable around the handle shaft 44, an output side gear 55 as a fourth gear arranged coaxially with the input side gear 54, a second planetary gear body 56 in mesh with the input side gear 54 and the output side gear 55, and the carrier body 50 as a second carrier body rotatably retaining the second planetary gear body 56. That is, the carrier body 50 serves as both the first and second carrier bodies.

The input side gear 54 and the output side gear 55 are spur gears having different diameters. The second planetary gear body 56 has a first spur gear portion 56a in mesh with the input side gear 54, and a second spur gear portion 56b which is coaxially fixed to the first spur gear portion 56a so as to integrally rotate with the first spur gear portion 56a and which is in mesh with the output side gear 55.

Bearings 57, 58 each exist between the handle shaft 44 and the input side gear 54 and the output side gear 55, respectively. That is, the input side gear 54 and the output side gear 55 are rotatable relative to the handle shaft 44.

The second planetary gear body 56 makes relative planetary movement with respect to the input side gear 54 and the output side gear 55. With the revolution of the second planetary gear 56, the carrier body 50 is rotated around the handle shaft 44 with respect to the input side gear 54 and the output side gear 55.

The ratio of the pitch circle diameters of the input side gear 54, the output side gear 55, and the second planetary gear body 56 are the same as the ratio of the pitch circle diameters of the main side stationary gear 47, the front side stationary gear 48, and the first planetary gear body 49. In this example, the sizes and numbers of teeth of the input side gear 54, the output side gear 55, and the second planetary gear body 56 are the same as those of the main side stationary gear 47, the front side stationary gear 48, and the first planetary gear body 49.

Here, the input side gear 54 is an element corresponding to the main side stationary gear 47, and the output side gear 55 is an element corresponding to the front side stationary gear 48.

Further, in this example, the carrier body 50 is a connecting element, the main side stationary gear 47 is a first base body side element, and the front side stationary gear 48 is a second base body side element.

The carrier body 50, which is a connecting element, serves as both the first and second carrier bodies. A planetary gear shaft 59 extends through the carrier body 50. The first and second planetary gear bodies 49, 56 rotate around the planetary gear shaft 59. Bearings 60, 61 exist between the first and second gear bodies 49, 56 and the planetary gear shaft 59.

The input side gear 54 is in mesh with an input side transmission gear 62. The rotation of the pedal shaft is transmitted to the input side transmission gear 62 by a main frame side transmission means (not shown), such as a shaft with a bevel gear.

The rotation of the output side gear 55 is transmitted to the front wheel through an output side transmission gear 63 and an output shaft 64 . The output side transmission gear 63 is fixed to the output shaft 64. Bearings 65, 66 each exist between the output shaft 64 and the input side transmission gear 62 and the front frame 43, respectively.

Next, the operation of this embodiment will be described. When, for example, only the handle shaft 44 is rotated without rotating the pedal shaft, the front side stationary gear 48 is rotated with the handle shaft 44, the first planetary gear body 49 makes planetary movement, and the carrier body 50 is rotated. As a result, the second planetary gear body 56 also makes planetary movement. However, if no rotation is transmitted to the input side transmission gear 62, the input side gear 54 and the output side gear 55 are not rotated with respect to the handle shaft 44 and the front frame 43.

On the other hand, when only the pedal shaft is rotated without rotating the handle shaft 44, the rotation of the pedal shaft is transmitted to the input side gear 54 through the input side transmission gear 62. When the input side gear 54 is rotated, the second planetary gear body 56 is rotated, and the output side gear 55 is rotated. The rotation of the output side gear 55 is transmitted to the front wheel through the output side transmission gear 63 and the output shaft 64. However, when the handle shaft 44 is not rotated, only the second planetary gear body 56 rotates, and the carrier body 50 does not.

In this way, the transmission of rotation between the pedal shaft and the front wheel is free from interference due to the handle shaft 44, which is a joint portion. This also applies to the case in which the handle shaft 44 is rotated at the same time the pedal shaft is rotated. That is, in the rotation transmission device of Embodiment 6, it is possible, with a simple construction, to transmit rotation while eliminating interference due to a joint portion. Thus, it is possible to obtain a front-wheel-drive or two-wheel-drive bicycle superior in handle operability.

While in Embodiment 6 the front side stationary gear 48 is directly fixed to the handle shaft 44, it is also possible to fix the front side stationary gear 48 to a handle interlock shaft different from the handle shaft, transmitting the rotation of the handle shaft to the handle interlock shaft.

### Embodiment 7

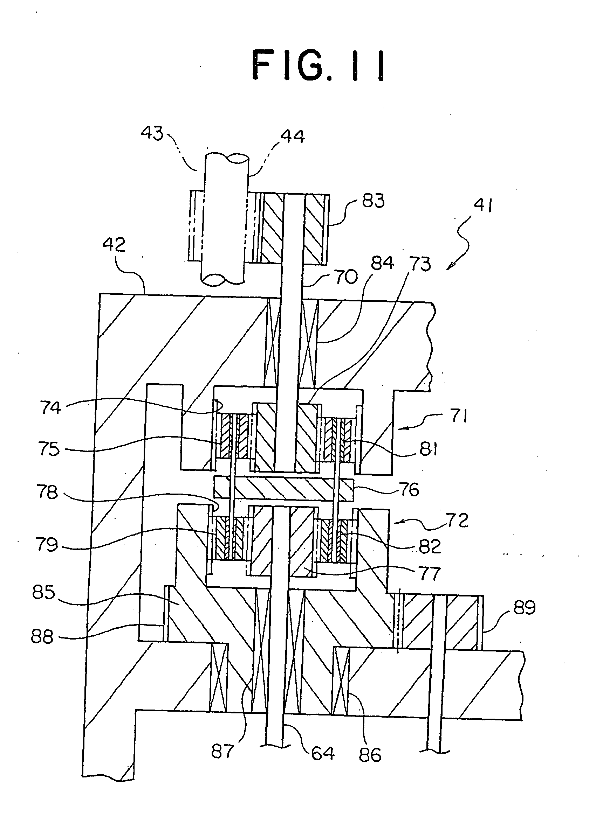

Next, Fig. 11 is a sectional view of a rotation transmission device according to Embodiment 7 of the present invention. Like Embodiment 6, this embodiment- uses a rotation transmission-device in order to drive the front wheel of a bicycle. Thus, a description of portions similar to those of Embodiment 6 will be omitted.

In the drawing, the rotation transmission device has first and second planetary gear mechanisms 71, 72 arranged coaxially with respect to each other.

The first planetary gear mechanism 71 has a first sun gear 73 as a first gear integrally rotatable with a handle interlock shaft 70 around the handle interlock shaft 70 (rotation center), a ring-like first internal gear 74 as a second gear arranged coaxially with the first sun gear 73, a plurality of first planetary gears 75 as first planetary gear bodies in mesh with the first sun gear 73 and the first internal gear 74, and a carrier body 76 as a first carrier body rotatably retaining the first planetary gears 15.

The first planetary gears 75 make relative planetary movement with respect to the first sun gear 73 and the first internal gear 74. The carrier body 76 is rotated around the axis of the handle interlock shaft 70 with the revolution of the first planetary gears 75 with respect to the first sun gear 73 and the first internal gear 74.

The second planetary gear mechanism 72 has a second sun gear 77 as a third gear rotatable around an output shaft 64 arranged coaxially with the handle interlock shaft 70, a ring-like second internal gear 78 as a fourth gear arranged coaxially with the second sun gear 77, a plurality of second planetary gears 79 as second planetary gear bodies in mesh with the second sun gear 77 and the second internal gear 78, and the carrier body 76 rotatably retaining the second planetary gears 79. That is, the carrier body 76 serves as both the first and second carrier bodies.

The second planetary gears 79 make relative planetary movement with respect to the second sun gear 77 and the second internal gear 78. The carrier body 76 is rotated around the axis of the output shaft 64 with the revolution of the second planetary gears 79 with respect to the second sun gear 77 and the second internal' gear 78.

The ratio of the pitch circle diameters of the second sun gear 77, the second internal gear 78, and the second planetary gears 79 are the same as the ratio of the pitch circle diameters of the first sun gear 73, the first internal gear 74, and the first planetary gears 75. In this example, the sizes and numbers of teeth of the second sun gear 77, the second internal gear 78, and the second planetary gears 79 are the same as those of the first sun gear 73, the first internal gear 74, and the first planetary gears 75.

Here, the second sun gear 77 is an element corresponding to the first sun gear 73, and the second internal gear 78 is an element corresponding to the first internal gear 74.

Further, in this example, the carrier body 76 is a connecting element, the first internal gear 74 is a first base body side element, and the first sun gear 73 is a second base body side element. The first internal gear 74, which is the first base body side element, is fixed to the main frame 42. The first sun gear 73, which is the second base body side element, is connected to the front frame 43 so as to be rotated relative to the main frame 42 through relative rotation of the front frame 43 with respect to the main frame 42.

The carrier body 76, which is a connecting element, serves as both the first and second carrier bodies. A plurality of planetary gear shafts 80 extend through the carrier body 76. The first and second planetary gears 75, 79 are rotated around the planetary gear shafts 80. Bearings 81, 82 exist between the first and second planetary gear bodies 75, 79 and the planetary gear shafts 80.

A handle interlock gear 83 is fixed to the handle interlock shaft 70. The handle interlock gear 83 is rotated integrally with the handle interlock shaft 70 by the rotation of the handle shaft 44. A bearing 84 exists between the handle interlock shaft 70 and the main frame 42.

The second internal gear 78 is provided in an internal gear body 85 rotatable around the output shaft 64 with respect to the main frame 42. A bearing 86 exists between the internal gear body 85 and the main frame 42. A bearing 87 exists between the internal gear body 85 and the output shaft 64.

An input side gear 88 is provided on the outer peripheral portion of the internal gear body 84. The input side gear 88 is in mesh with an input side transmission gear 89. The rotation of the pedal shaft is transmitted to the input side transmission gear 89 by a main frame side transmission means (not shown), such as a shaft with a bevel gear. The rotation of the output shaft 64 is transmitted to the front wheel.

Next, the operation of this embodiment will be described. When, for example, only the handle shaft 44 is rotated without rotating the pedal shaft, the first sun gear 73 is rotated, the first planetary gear bodies 75 make planetary movement, and the carrier body 76 is rotated. As a result, the second planetary gears 82 also make planetary movement. However, if no rotation is transmitted to the second internal gear 78, the second sun gear 77 and the output shaft 64 are not rotated with respect to the handle shaft 44 and the front frame 43.

On the other hand, when only the pedal shaft is rotated without rotating the handle shaft 44, the rotation of the pedal shaft is transmitted to the input side gear 88 through the input side transmission gear 89. When the input side gear 88 is rotated, the second internal gear 78 is integrally rotated, the second planetary gear 79 is rotated, and the second sun gear 77 is rotated. The rotation of the sun gear 77 is transmitted to the front wheel through the output shaft 64. However, when the handle shaft 44 is not rotated, only the second planetary gears 79 rotates, and the carrier body 76 does not.

In this way, the transmission of rotation between the pedal shaft and the front wheel is free from interference due to the handle shaft 44, which is a joint portion. This also applies to the case in which the handle shaft 44 is rotated at the same time as the pedal shaft is rotated. That is, in the rotation transmission device of Embodiment 7, it is possible, with a simple construction, to transmit rotation while eliminating interference due to a joint portion. Thus, it is possible to obtain a front-wheel-drive or two-wheel-drive bicycle superior in handle operability.

Further, the first sun gear 73, which is a second base body side element, is fixed to the handle interlock shaft 70, which is different from the handle shaft 44, so that the rotation transmission device can be easily added to an existing bicycle.

While Embodiments 6, 7 have been described as applied to the transmission of a driving force to the front wheel of a bicycle, it goes without saying that the rotation transmission device of the present invention is also applicable to a tricycle, an automatic two-wheeler, and an automatic three-wheeler.

While in Embodiments 6, 7 described above the rotation of the pedal shaft is transmitted to the front wheel, it is also possible to transmit the rotation of the pedal shaft to the rear wheel to transmit the rotation of the rear wheel shaft to the front wheel through the rotation transmission device.

Further, the rotation transmission device of the present invention can be used, for example, as an operation device to be used in various environments and a control device for the same. For example, it can be used as a robot arm for operations in outer space, a robot apparatus for mine cleaning operations and operations in a radiation-contaminated area, and a device for operating heavy equipment for civil engineering works.

Furthermore, it can also be used in a medical instrument to be inserted into the body of a patient to perform diagnosis and treatment for the affected part.

Further, the rotation transmission device of the present invention is also applicable to the transmission of driving force between a ship engine and a driving screw. In this case, even if a joint portion is provided between the engine and the screw, it is possible to rotate the screw without interference due to the movement of the joint portion, so that it is possible to transmit the driving force while using, for example, a mechanism for rotating the direction of the screw around an axis perpendicular to the water surface.

Further, the rotation transmission device of the present invention is applicable to a wind power system. A wind power system as a base body assembly has a tower as a second base body arranged upright at the installation place, a rotary body support portion as a first base body supported on this tower and rotatable around a vertical axis, a rotary body as a first rotary body supported by this rotary body support portion and rotatable around a horizontal axis, and a plurality of blades radially mounted to this rotary body. A power generator main body is installed in the lower portion of the tower. The power generator main body has a power generator stator and a power generator rotor as a second rotary body rotated through transmission of the rotation of the rotary body.

In this wind power system, by using the rotation transmission device of the present invention, it is possible to transmit the rotation of the rotary body to the power generator rotor without interference due to the rotation of a rotary body support portion with respect to the tower. Thus, the power generator main body and control board, which have conventionally been installed on top of the tower, can be installed in the lower portion of the tower. As a result, the tower construction can be simplified, and maintenance operations can be facilitated. Further, even in a case in which the inclination angle of the rotation shaft of the rotary body is adjustable, it is possible to transmit rotation without interference due to a change in the inclination angle, by providing a similar rotation transmission device.

Apart from the above, the present invention is applicable to all other technical fields.

## Claims

1. A rotation transmission device which is provided in a base body assembly having a first base body and a second base body connected together to be rotatable relative to each other, rotation being transmitted between a first rotary body provided on the first base body and a second rotary body provided on the second base body, comprising:
a first planetary gear mechanism having a first gear rotatable around a rotation center, a second gear arranged coaxially with the first gear, a first planetary gear body meshed with the first gear and the second gear to make a planetary movement relative to the first gear and the second gear, and a first carrier body rotated around the rotation center relative to the first gear and the second gear with a revolution of the first planetary gear body with respect to the first gear and the second gear; and
a second planetary gear mechanism having a third gear rotatable around the rotation center, a fourth gear arranged coaxially with the third gear, a second planetary gear body meshed with the third gear and the fourth gear to make a planetary movement relative to the third gear and the fourth gear, and a second carrier body rotated around the rotation center relative to the third gear and the fourth gear with a revolution of the second planetary gear body with respect to the third gear and the fourth gear, wherein:
the ratio of the pitch circle diameters of the third gear, the fourth gear, and the second planetary gear body is the same as the ratio of the pitch circle diameters of the first gear, the second gear, and the first planetary gear body;
assuming that the third gear is an element corresponding to the first gear, that the fourth gear is an element corresponding to the second gear, and that the second carrier body is an element corresponding to the first carrier body, a connecting element, which is one of the first gear, the second gear, and the first carrier body, rotates integrally with an element corresponding to the connecting element;
a first base body side element, which is one of the two elements obtained by excluding the connecting element from the first gear, the second gear, and the first carrier body, is connected to the first base body to be rotatable with respect to the second base body through relative rotation of the first base body with respect to the second base body;
a second base body side element, which is obtained by excluding the connecting element and the first base body side element from the first gear, the second gear, and the first carrier body, is connected to the second base body to be rotatable with respect to the first base body through relative rotation of the second base body with respect to the first base body; and
rotation is transmitted between an element corresponding to the first base body side element and the first rotary body, and rotation is transmitted between an element corresponding to the second base body side element and the second rotary body.

2. A rotation transmission device according to Claim 1, wherein the first gear is a first sun gear, the second gear is a ring-like first internal gear, and the first planetary gear body is a first planetary gear in mesh with the first internal gear and the first sun gear.

3. A rotation transmission device according to Claim 1, wherein the first gear and the second gear are spur gears of different diameters, and wherein the first planetary gear body has a first spur gear portion in mesh with the first gear, and a second spur gear portion coaxially fixed to the first spur gear portion to rotate integrally with the first spur gear portion and in mesh with the second gear.

4. A rotation transmission device according to Claim 1, wherein the base body assembly has three ormorebasebodies connected together in series to be rotatable relative to each other, and wherein the first planetary gear mechanism and the second planetary gear mechanism are arranged at each joint portion, using base bodies adjacent to each other as the first and second base bodies.
